# EUROPÄISCHE PATENTANMELDUNG

(11) **EP 4 253 457 A1**
(43) Veröffentlichungstag der Anmeldung: **04.10.2023**
(21) Anmeldenummer: 23163060.9
(22) Anmeldetag: 21.03.2023
(51) Int. Cl.: C08J 7/04, B32B 3/26, B32B 3/30, B32B 7/12, B32B 15/082, B32B 15/085, B32B 15/095, B32B 21/08, B32B 27/08, B32B 27/20, B32B 27/30, B32B 27/32, B32B 27/40, C08J 7/046, C08L 27/04

(54) **UV SCHUTZFOLIE FÜR DEN AUSSENBEREICH**

(30) Priorität: 31.03.2022 DE 102022107719
(71) Anmelder: Renolit SE, 67547 Worms (DE)
(72) Erfinder: STRUVE, Friedrich-Wilhelm, 83024 Rosenheim (DE)
(74) Vertreter: Zellentin & Partner mbB Patentanwälte

(57) **Zusammenfassung**

Verfahren zur Herstellung einer UV Schutzfolie umfassend die Schritte Bereitstellen einer Basisfolie aus Polyvinylchlorid, Polyacrylat oder Polyolefin, die ein gedrucktes Design und/oder eine Färbung der Basisfolie aufweist; Aufbringen einer Zwischenschicht aus einer ersten Schmelzbeschichtung auf Polyurethanbasis; Aufbringen einer Schicht aus einer abriebbeständigen, zweiten Schmelzbeschichtung auf Polyurethanbasis; und Aufbringen eines Lackes und/oder einer Polymerschutzschicht; wobei die abriebbeständige Schmelzbeschichtung auf Polyurethanbasis und/oder der Lack und/oder eine aufgebrachte Zwischenschicht aus einer Reaktivschmelzmasse auf Polyurethanbasis strukturiert wird, indem der Auftrag durch ein Walzenpaar mit einer strukturierten Walze erfolgt.

## Beschreibung

Die vorliegende Erfindung betrifft UV Schutzfolien für den Außenbereich, speziell zur Beschichtung von Bauelementen wie Bodenbelägen, insbesondere von Terrassendielen, die zur Nutzung im Freien bestimmt sind.

Ein wichtiger Trend in den letzten Jahren sind wertig aussehende Bauelemente für den Außenbereich. Immer mehr Menschen gestalten Terrassen, Balkone und Sitzplätze im Freien als weiteren "Wohnraum". Dazu gehören neben entsprechendem Mobiliar auch wohnliche Bodenbeläge, Sichtschutzelemente, Zäune, Pflanzkästen und vieles mehr. Zwar ist die Optik von Naturstein und Holz weitgehend bevorzugt, aber es werden pflegeleichtere Oberflächen verlangt.

Diese Anforderungen lassen sich durch Kunststoffe vereinbaren. Neben dem Einsatz von massivem Kunststoff, in jüngerer Zeit auch sog. WPC-Materialien (wood plastic composite), ist es seit langem bekannt, Substrate zu beschichten. Das ist auch bei Elementen wie Wänden oder Zäunen sehr erfolgreich. Bei Bodenbelägen ist jedoch bisher die Widerstandsfähigkeit nicht ausreichend und/oder es kommt zu anderen Mängeln. So haben die von Möbeln und Fußbodenpaneelen für den Innenbereich bekannten Laminierfolien im Außenbereich unter anderem das Problem, dass Dekorpapiere aufgrund mangelnder UV-Schutzwirkung der oberen Schicht(en) ausbleichen und die Oberfläche oft zu glatt ist, so dass die für Böden im Außenbereich erforderliche Rutschsicherheit nicht erreicht wird.

Für den Innenbereich schlägt DE 10 2012 022 461 A1 ein Beschichtungsmaterial vor, für das ein druck-, temperatur- und dimensionsstabiler Druckträger mit einer Nutzschicht, die eine innere, transparente, korundhaltige Schicht, die sich mit dem Druckträger in Kontakt befindet, und eine äußere Schicht, umfassend mindestens eine Kunststoffschicht, in einer Bandpresse laminiert werden. Die äußere Oberfläche kann beim Laminieren oder danach geprägt werden. Derartige Beschichtungsmaterialien eignen sich ohne Veränderungen nicht für den Außenbereich.

Somit besteht weiter die Aufgabe, pflegeleichte und dauerhafte Oberflächen mit gewünschter Optik für den Außenbereich bereitzustellen.

Gemäß der nicht vorveröffentlichten Anmeldung PCT/EP 2021/078028 weisen bedruckte Basisfolien aus PVC, Polyacrylat oder Polyolefin, die mit einer abriebbeständigen Schmelzbeschichtung auf Polyurethanbasis versehen und lackiert werden, einen wirksamen UV Schutz auf und erreichen damit die notwendige Dauerhaftigkeit des Druckdesigns. Die Rutschsicherheit wird durch eine Prägung in Kombination mit der abriebbeständigen PUR-Schmelzbeschichtung gewährleistet. Die Prägung ist in einer bevorzugten Variante besonders einfach durch eine geprägte Zwischenschicht unterhalb der PUR-Schmelzbeschichtung erhältlich. Die Herstellung der Folien erfolgt gemäß PCT/EP 2021/078028 durch Aufbringen einer Schmelzbeschichtung auf Polyurethanbasis auf eine Basisfolie aus PVC, Polyacrylat oder Polyolefin, die mit einem Design bedruckt wurde und/oder eingefärbt ist, und Aufbringen eines Lackes und/oder einer Polymerschutzschicht über der Schmelzbeschichtung, wobei eine Schicht unterhalb des Lacks geprägt wird. Die Prägung bedeutet jedoch einen zusätzlichen Schritt, der mit Aufwand verbunden ist. Auch in der EP 3 288 688 B1 ist zur Herstellung von strukturierten Oberflächen eine Prügung einer zuvor auf eine Trägerfläche aufgebrachten feuchtigkeitsvernetzenden Reaktiv-Schmelzmasse auf Basis von Polyurethan beschrieben.

Überraschend wurde nun gefunden, dass die gewünschte Strukturierung auch durch einen Auftrag der Schmelzbeschichtung und/oder des Lackes mittels strukturierter Walze anstelle der Prägung möglich ist. Damit lässt sich die Herstellung wesentlich vereinfachen. Die obige Aufgabe wird somit durch ein Verfahren zur Herstellung von UV Schutzfolien gelöst, bei dem eine Basisfolie aus PVC, Polyacrylat oder Polyolefin, die mit einem Design bedruckt wird und/oder eingefärbt ist, bereitgestellt wird, optional oberhalb der Basisfolie eine Zwischenschicht aus einer Reaktivschmelzmasse auf Polyurethanbasis aufgebracht wird, oberhalb der Basisfolie bzw. ggfs. oberhalb der Zwischenschicht eine Schicht aus einer abriebbeständigen Schmelzbeschichtung auf Polyurethanbasis aufgebracht wird und darüber ein Lack und/oder eine Polymerschutzschicht aufgebracht wird, wobei die abriebbeständige Schmelzbeschichtung auf Polyurethanbasis oder die Zwischenschichtschicht oder der Lack oder zwei davon oder alle drei durch ein Walzenpaar mit einer strukturierten Walze aufgetragen und durch die strukturierte Walze mit einer Struktur versehen wird. Die Aufgabe wird außerdem durch eine UV Schutzfolie gelöst, die umfasst:
- eine Basisfolie aus PVC, Polyacrylat oder Polyolefin,
- ein gedrucktes Design und/oder eine Einfärbung der Basisfolie,
- eine glatte Zwischenschicht aus einer ersten Schmelzbeschichtung auf Polyurethanbasis
- eine Schicht aus einer abriebbeständigen, zweiten Schmelzbeschichtung auf Polyurethanbasis, und
- einen Lack und/oder eine Polymerschutzschicht.

Die erfindungsgemäßen UV Schutzfolien haben einen mindestens vier-schichtigen Aufbau. Weitere Schichten sind möglich, z.B. ein Primer auf der Unterseite der Basisfolie. Die Schichten der UV Schutzfolie können jeweils unabhängig voneinander aus mehreren Lagen bestehen. Beispielsweise können dicke Schichten durch mehrmaliges Aufrakeln des Materials erhalten werden oder eine Basisfolie durch Coextrusion hergestellt sein. Die Lagen können identisch oder unterschiedlich zusammengesetzt sein.

Im Rahmen der vorliegenden Erfindung meint unten, unterhalb, Unterseite usw. diejenige Fläche einer Schicht, die dem Substrat zugewandt bzw. näher am Substrat ist. Oben, oberhalb und Oberseite bezeichnet eine vom Substrat abgewandte bzw. weiter entfernte Lage, die oberste Fläche der UV Schutzfolie bildet die Gebrauchsoberfläche des Bauelements.

Als untere Schicht ist eine bedruckbare Basisfolie vorgesehen. Diese muss einerseits beim Laminieren mit dem Substrat eine ausreichende Haftung herstellen, andererseits verleiht sie der UV Schutzfolie als Träger während der Herstellung und Verarbeitung die notwendigen mechanischen Eigenschaften.

Geeignete Materialien für die Basisfolie sind PVC (Polyvinylchlorid), Polyacrylate und Polyolefine. Diese weisen entweder als solches, zumindest aber mit an sich bekannten Additiven, eine gute UV-Stabilität auf. Zudem sind sie sehr gut gegen Hydrolyse und Thermolyse beständig.

Die Verbindung mit dem Substrat erfolgt in der Regel über eine Kleberlaminierung, z.B. mittels Polyurethanhotmeltkleber, reaktivem Polyolefinhotmelt oder reaktivem Silan-terminiertem Hotmelt. Zur Optimierung der Haftung kann die Basisfolie unterseitig mit einem Primer versehen werden. Beispielsweise ist ein Primer auf Basis von Vinylchlorid-Vinylacetat-Copolymer für PVC, Polyacrylat und PVC-Polyacrylat Folien gut geeignet. Für Polyolefinfolien eignet sich u.a. ein 2-Komponenten Polyurethanprimer. Die Basisfolie kann alternativ oder zusätzlich einer Plasmastrahlung oder Koronabehandlung oder anderen Oberflächenbehandlung unterzogen werden.

Eine PVC-Basisfolie enthält vorzugsweise neben dem Polyvinylchlorid einen Stabilisator, Verarbeitungshilfsmittel, UV-Absorber, ein Antistatikum und Pigmente. Bevorzugt sind auch Modifier, insbesondere Polyacrylat, und epoxidiertes Sojabohnenöl enthalten. Als Stabilisator hat sich besonders Zinn bewährt, ebenso sind BaZn und CaZn brauchbar. Zinn wird vorzugsweise in Kombination mit Phosphit als Costabilisator verwendet. Bei den Verarbeitungshilfsmitteln handelt es sich beispielsweise um polymere Fließhilfen, z.B. auf Basis von MMA, BA, Styrol. Außerdem können PVC Folien mit Polymerweichmacher und mit Copolymer - insbesondere auf Basis von Vinylchlorid und Acrylaten - verwendet werden.

Der PVC Anteil beträgt typischerweise 70 Gew.-% bis 85 Gew.-%. Der Weichmacheranteil liegt in der Regel bei bis zu 30 Gew.-%, kann aber durch geeignete Rohstoffergänzungen bzw. alternative Rohstoffe wie zum Beispiel Copolymere ganz oder teilweise ersetzt werden. Ein Baustein in der Rezeptur kann recyceltes Material sein. Die Menge kann auf bis zu 20 Gew.-% gesetzt werden, bevorzugt sind bis zu 5 Gew.-%. Das eingebrachte Material kann dabei von gleicher oder leicht abgeänderter Rezeptur sein.

Polyacrylat-Basisfolien können vorzugsweise aus Methylmethacrylat (MMA), Butylacrylat (BA) und/oder Ethylacrylat (EA) sein, insbesondere werden Copolymere aus zwei, besonders bevorzugt aus allen drei der genannten Monomere eingesetzt. Die Basisfolie enthält außerdem üblicherweise ein oder mehrere von UV Absorbern z.B. auf Benzotriazolbasis, Antioxidationsmitteln wie beispielsweise phenolischen Antioxidationsmitteln, Lichtstabilisatoren, bevorzugt HALS, und Pigmenten. Außerdem können Verarbeitungshilfen auf Basis Polyacrylat enthalten sein.

Polyolefin-Basisfolien können bevorzugt aus Polyethylen, Polypropylen oder Olefin-Copolymeren sein. Olefine meint hier Kohlenwasserstoffe mit mindestens einer aliphatischen C-C Doppelbindung, d.h. lineare und cyclische Alkene, die Kohlenwasserstoffsubstituenten tragen können. Substituenten mit anderen Gruppen wie z.B. Säure- und Estergruppen sind nicht umfasst. Die Folien können Füllstoff enthalten, z.B. Kreide, und die üblichen Additive. Beispielsweise kann die Polyolefin-Basisfolie je 100 Gewichtsteile Polyolefin oder Polyolefinlegierung, vorzugsweise Propylenhomopolymerisat oder Polyethylen hoher Dichte (HDPE), 25 bis 120 Gewichtsteile eines feinteiligen mineralischen Füllstoffes oder mineralischen Füllstoffgemisches, vorzugsweise Calciumcarbonat, Erdalkalioxide, Mikrotalcum, Kaolin, Silicate, Magnesium-Aluminium-Oxy- oder -Hydroxy-Carbonate und/oder Silicate und/oder Kieselsäuregel mit einem mittleren Körnungsdurchmesser unter 10 µm, vorzugsweise von 0,05 bis 5 µm, enthalten. Nach einer anderen Ausführungsform enthält die Polyolefin-Basisfolie je 100 Gewichtsteile Polyolefin oder Polyolefinlegierung, vorzugsweise Propylenhomopolymerisat oder HDPE, 5 bis 40 Gewichtsteile (bezogen auf 100 Gewichtsteile Polyolefin), vorzugsweise 10 bis 30 Gewichtsteile, mindestens eines feinteiligen organischen Füllstoffes oder Kombinationen dieser Gewichtsmengen organischer Füllstoffe mit 0 bis 30 Gewichtsteilen, vorzugsweise 5 bis 25 Gewichtsteilen, mindestens eines feinteiligen mineralischen anorganischen Füllstoffes oder Füllstoffgemisches. In einer weiteren bevorzugten Ausführungsform enthält die Basisfolie 50 bis 80 Gew.-% Polypropylen, vorzugsweise lichtstabilisiert, 5 bis 20 Gew.-% HDPE, vorzugsweise lichtstabilisiert, 1 bis 5 Gew.-% Antioxidationsmittel, 1 bis 5 Gew.-% Verarbeitungshilfsmittel und 5 bis 15 Gew.-% Antiblockadditive sowie ggfs. farbgebende Zusätze.

Die Stärke der Basisfolie beträgt normalerweise von 80 bis 250 µm, vorzugsweise von 100 bis 200 µm und besonders bevorzugt von 120 bis 160 µm. Es können aber auch dünnere Basisfolien, z.B. bis hinab zu 40 µm und darunter, oder dickere Basisfolien, z.B. bis 300 µm, 450 µm, 500 µm oder mehr, im Einzelfall sinnvoll sein. Die Basisfolie wird in der Regel durch Kalandrieren hergestellt, kann aber auch extrudiert sein. Extrudieren schließt alle Verfahren, nämlich Blasfolien-, Gießfolien- und Castfolien-Extrusion, mit ein. Bevorzugt ist die Gießfolienextrusion. Die Schmelze wird über eine Breitschlitzdüse verteilt und durch eine Kühlwalze/Chillwalze abgekühlt. Als Werkzeuge sind Einschnecken-und Mehrschneckenextruder und deren Variationen denkbar. Bevorzugt erfolgt die Herstellung mit einem Einschneckenextruder. Die Basisfolie kann uni- oder bidirektional verstreckt werden. Dadurch erhält sie eine höhere Dimensionsstabilität gegenüber den Temperaturen während des Auftrags der Schmelzbeschichtung. Zudem wird das Risiko von Mikrorissen in der Schmelzbeschichtung bei einem Ummanteln von Substraten mit der erfindungsgemäßen UV-Schutzfolie minimiert.

Durch ein Verstrecken passt sich die Dehnbarkeit der Basisfolie derjenigen der Schmelzbeschichtung an, d.h. sie wird ähnlich gering.

Auf der Basisfolie wird das gewünschte Design aufgedruckt, sofern nicht für Unifarben die Basisfolie eingefärbt ist. Die Basisfolie kann hierbei durchgefärbt sein bzw. bei mehrlagigen Basisfolien kann die oberste Lage durchgefärbt sein. Dies ist für unifarbene Designs bevorzugt. Auch für eine Bedruckung kann durch eine durchgefärbte Basisfolie oder oberste Lage der Basisfolie eine Grundfarbe bereitgestellt werden. Der Designdruck kann auf jede bekannte Art erzielt werden. Besonders brauchbar sind z.B. Tiefdruck, insbesondere mit Lösungsmittelfarben, und Digitaldruck. Als Design sind Holzdekor, Naturstein und Phantasiemuster ebenso möglich, wie Unifarben. Die Druckfarbe wird z.B. durch eine Reihenschaltung an Druckwalzen auf die Basisfolie appliziert. Im Digitaldruck können sowohl Single-Pass als auch Multi-Pass Druckköpfe zur Gestaltung verwendet werden. Die Druckbilder werden oftmals aus mehreren Druckfarben zusammengesetzt und zeichnen sich durch Lichtstabilität aus. Neben lösungsmittelbasierten Druckfarben sind auch solche mit wässriger Basis denkbar.

Die eingesetzten Pigmente zur Durchfärbung der Basisfolie oder deren oberster Lage und zur Erzeugung von Unifarben können organisch und anorganisch sein und den IR-Anteil im Sonnenlicht reflektieren oder transmittieren.

Oberhalb des Drucks werden ein oder zwei Schmelzbeschichtungen auf Polyurethanbasis aufgebracht. Mit Schmelzbeschichtung auf Polyurethanbasis, auch kurz PUR-Schmelzbeschichtung oder Schmelzbeschichtung genannt, ist im Rahmen der vorliegenden Erfindung eine Reaktivschmelzmasse gemeint, wie sie z.B. in WO 2006/056472 A1, WO 2012/084823 A1, WO 2006/106143 A1 oder US 8,153,265 B2 beschrieben ist. Die Reaktivschmelzmasse kann z.B. durch die Feuchtigkeit der Umgebung reagieren und aushärten, aber auch durch Bestrahlung mit z.B. UV-Licht. Es kann eine ein- oder zweikomponentige Masse sein. Wichtig ist, dass es sich um eine transparente PUR-Schmelzbeschichtung handelt, damit die Farbe bzw. der Druck durch die Schmelzbeschichtung sichtbar bleibt.

Vorzugsweise werden durch die Luftfeuchtigkeit aushärtende einkomponentige Reaktivschmelzmassen eingesetzt, die ein Polyurethanprepolymer enthalten. Beim Erhitzen verflüssigen sich die Prepolymerketten zu einer applizierbaren Flüssigkeit, die unter Zufuhr von Feuchte zu einer Polyurethanschicht aushärtet.

Zur Steigerung der Abriebfestigkeit enthält die Reaktivschmelzmasse der abriebbeständigen, zweiten Schmelzbeschichtung Partikel mit entsprechender Härte. Bevorzugt sind als Schleifmittel verwendete Partikel wie Korund, Zirkon, Siliciumcarbid, Bornitrid, Diamant oder Glaspartikel. Insbesondere Korund und Glaspartikel sind aufgrund der Wirtschaftlichkeit bevorzugt.

Diese zweite PUR-Schmelzbeschichtungs-Schicht hat normalerweise eine Stärke von 10 bis 150 µm, vorzugsweise von 20 bis 120 µm und insbesondere von 30 bis 100 µm. Sie kann in an sich bekannter Weise durch Aufstreichen, Aufrakeln, Walzenauftrag etc. aufgebracht werden.

Erfindungsgemäß erfolgt vorzugsweise der Auftrag der abriebbeständigen, zweiten Schmelzbeschichtung mit einem Walzenpaar, bei dem eine Walze strukturiert ist. Alternativ kann die erste Schmelzbeschichtung und/oder der Lack entsprechend strukturiert werden. Bevorzugt wird zur Strukturierung mit einem Walzenpaar eine keramisch beschichtete Walze mit der gewünschten Struktur, z.B. einer Holzporenstruktur oder von Fliesenfugen, verwendet Es ist zweckmäßig, die strukturierte Walze regelmäßig in einem speziellen Bad aus Lösemittelgemischen oder unter Einsatz von Hochdruckdüsen, Trockeneisbestrahlung und/oder Laserverdampfung zu reinigen, damit die Auftragstiefe erhalten bleibt. Die Walzen werden vorzugsweise getauscht um die Stillstandszeiten zu verringern. Trockeneisreinigung oder Laserverdampfung ließen sich auch in die Maschine integrieren, aber mit Stillstand.

Unter der abriebbeständigen, zweiten PUR-Schmelzbeschichtung ist optional eine, bei der erfindungsgemäßen Folie glatte, Zwischenschicht angeordnet, die ebenfalls aus einer Reaktivschmelzmasse auf Polyurethanbasis gebildet wird, jedoch keinen oder wesentlich weniger Füllstoff als die PUR-Schmelzbeschichtung enthält. Auch die Zwischenschicht muss transparent sein. Durch die Zwischenschicht ist es besonders einfach möglich, die gesamte PUR-Schmelzbeschichtung blasenfrei und damit hochtransparent zu erhalten. Ohne eine füllstoffarme oder füllstofffreie Zwischenschicht können beim Applizieren der PUR-Schmelzbeschichtung Gasbläschen eingetragen werden, welche die Transparenz beeinträchtigen.

Das erfindungsgemäße Verfahren eignet sich auch zur Herstellung von UV Schutzfolien mit geprägter oder strukturierter Zwischenschicht. Sofern die Zwischenschicht und/oder der Lack strukturiert ist, ist es nicht nötig, die abriebbeständige zweite Schmelzbeschichtung mit einer strukturierten Walze aufzutragen. Der strukturierte Lack bzw. insbesondere die strukturierte Zwischenschicht gewährleistet in einem solchen Fall eine ausreichende Rauigkeit und damit Rutschhemmung. Daher erfolgt bei einer strukturierten Zwischenschicht vorzugsweise der Auftrag der abriebbeständigen, zweiten Schmelzbeschichtung ohne Strukturierung. Diese Schicht (und ggfs. der Lack) behält die Struktur der Zwischenschicht, füllt die Vertiefungen nicht aus.

Die Stärke der Zwischenschicht richtet sich nach der gewünschten Prägetiefe bzw. Tiefe der Strukturierung und der Stärke der abriebbeständigen zweiten PUR-Schmelzbeschichtungs-Schicht und beträgt in der Regel von 10 bis 100 µm, vorzugsweise von 20 bis 80 µm, besonders bevorzugt 30 bis 60 µm.

Der Auftrag der Zwischenschicht kann in gleicher Weise wie der Auftrag der PUR-Schmelzbeschichtung erfolgen, wobei für die Beschichtungen einer UV Schutzfolie gleiche oder unterschiedliche Verfahren benutzt werden können. Der Auftrag erfolgt mit einem Walzenpaar, von dem eine Walze strukturiert ist, sofern weder die über der Zwischenschicht liegende PUR-Schmelzbeschichtung noch der Lack strukturiert sein soll bzw. kein Lack verwendet wird. In einer bevorzugten Ausführungsform wird die Zwischenschicht mittels einer Schlitzdüse, mit oder ohne Rollstab, aufgebracht, und die PUR Schmelzbeschichtungs-Schicht mittels strukturiertem Walzenauftrag. Zweckmäßig wird für die Zwischenschicht die gleiche Reaktivschmelzmasse wie für die PUR-Schmelzbeschichtung aber ohne Partikel verwendet. Es ist auch möglich, eine andere Reaktivschmelzmasse zu verwenden, z.B. eine strahlenhärtbare Masse für die Zwischenschicht und eine durch Feuchtigkeit aushärtende Masse für die Schmelzbeschichtung. Die Zwischenschicht kann auch als Folie bereitgestellt werden, z.B. als geprägte Folie. Die Zwischenschicht verbessert den UV-Schutz wesentlich, da keine oder wenig Partikel enthalten sind. Ohne die Zwischenschicht könnten Partikel in der PUR-Schmelzbeschichtung bis zur Basisfolie reichen und damit Licht direkt auf das gedruckte Design durchlassen.

Sofern keine geprägte oder strukturierte Zwischenschicht aus einer Reaktivschmelzmasse auf Polyurethanbasis vorgesehen ist sondern eine glatte Zwischenschicht, wird entweder der Lack, oder vorzugsweise die PUR-Schmelzbeschichtungs-Schicht strukturiert. Die Strukturierung des Lacks und/oder der Zwischenschicht und/oder der PUR-Schmelzbeschichtung erfolgt erfindungsgemäß mit dem Walzenpaar, durch das der Lack bzw. die Schicht aufgetragen wird. Es ist auch möglich, eine tiefe und/oder grobe Struktur in der PUR-Schmelzbeschichtungs-Schicht oder der Zwischenschicht mittels Walzenauftrag derselben vorzunehmen und den Lack zusätzlich mit einer feinen oder feineren Struktur zu versehen. Diese feine(re) Struktur kann mittels Walzenauftrag des Lacks oder durch ein anderes an sich bekanntes Verfahren eingebracht werden. Wie ebenfalls bekannt kann das Prägemuster bzw. die Strukturierung auf das Druckdesign abgestimmt sein und mit diesem korrespondieren. So ist es üblich, dass eine Prägung/Strukturierung der Maserung der gedruckten Holzstruktur folgt oder bei einer Fliesenoptik Fugen simuliert.

Typische Prägetiefen bzw. Tiefen der Strukturierung betragen von 5 bis 30 µm, vorzugsweise von 10 bis 20 µm. Dies gewährleistet in Kombination mit den Partikeln in der PUR-Schmelzbeschichtungs-Schicht eine ausreichende Rutschhemmung. Üblicherweise werden Rutschsicherheitswerte von mindestens R10 bis R12 nach DIN 51130 bzw. ASR A1.5/1,2 erreicht, vorzugsweise von mindestens R11. Die Prägetiefen bzw. Tiefen der Strukturierung können aber wenn das Design es wünschenswert erscheinen lässt auch wesentlich tiefer sein, z.B. 60 µm oder noch mehr.

Die obere Schicht wird von einem transparentem Lack und/oder einer abziehbaren Polymerschutzschicht gebildet. Die UV Schutzfolie ist aufgrund der Strukturierung der Zwischenschicht und/oder der abriebbeständigen, zweiten PUR Schmelzbeschichtungsschicht auf der Oberfläche sehr rau. Das ist auch gewünscht um eine hohe Rutschhemmung im nassen Zustand zu erreichen. Eine sehr raue und sehr harte abriebbeständige Oberfläche hat aber den Nachteil, dass sich die Andruckwalzen von Ummantelungs- oder Beschichtungsanlagen in kürzester Zeit abnutzen und der Prozess instabil wird. Reklamationen durch fehlerhafte Beschichtung sind die Folge. Daher wird die Oberfläche der erfindungsgemäß hergestellten bzw. der erfindungsgemäßen Schutzfolie von dem Lack oder der Polymerschutzschicht gebildet. Das Aufbringen eines Lackes oder einer Polymerschutzschicht ist auch nötig um die Folie mit der PUR Schmelzmassenbeschichtung sofort aufwickeln zu können. Ansonsten verblockt die Folienrolle, da es normalerweise einige Zeit dauert, bis die aufgetragenen Schmelzbeschichtungen blockfest ausgehärtet sind. Wenn die Polymerschutzschicht keine zu große Haftung zur PUR-Schmelzmasse aufbaut, kann man die Lackschicht weglassen, das Material ist durch die Schutzschicht aufwickelbar. Ein zusätzlicher Vorteil der Schutzschicht ist ein Schutz der Oberfläche des Bauelementes gegen Verkratzen z.B. durch die rutschhemmende PUR-Schmelzbeschichtung anderer Bauteile. Ein Lack bleibt Teil der erfindungsgemäßen Schutzfolie, die Polymerschutzschicht wird nach Fertigung des Bauelements oder direkt vor bzw. nach seiner Verlegung/Installation abgezogen.

Als Lack sind Acrylatlacke und Polyurethanlacke bevorzugt, insbesondere strahlenhärtbare Lacke. Die Vernetzung des Lacks erfolgt vorzugsweise durch UV- oder LED Strahler. Dies kann durch eine einzelne oder mehrere Quellen geschehen. Die Energieleistung beträgt dabei z.B. 30 W bis 200 W, bevorzugt 50 W bis 180 W, insbesondere 90 W bis 150 Watt.

Der Lack wird zweckmäßig mittels Walzenapplikation oder durch Sprühauftrag appliziert und ggfs. durch Bestrahlung gehärtet. Wie bereits erwähnt, kann der Lack die einzige Strukturierung der UV Schutzfolie aufweisen und wird dann mit einem Walzenpaar aufgetragen, von dem eine Walze die gewünschte Struktur bereitstellt. Stärken der Lackschicht von 1 bis 50 µm, vorzugsweise von 3 bis 15 µm, besonders bevorzugt von 5 bis 10 µm, haben sich bewährt. Sofern der Lack die Strukturierung erhält werden entsprechend dickere Lackschichten gewählt, welche die gewünschte Tiefe der Strukturierung, z.B. auch 60 µm oder mehr, ermöglichen. Der Lack verbessert zum einen den UV-Schutz, zum anderen stellt er eine Antiblockwirkung bereit, so dass sich die UV Schutzfolie aufwickeln und vor allem problemlos abwickeln lässt. Der Lack hat normalerweise einen niedrigen Glanzgrad von 4 bis 20 Glanzpunkten, vorzugsweise bis 15 Glanzpunkten, gemäß ISO 2813. Die Messung erfolgt mittels eines Goniophometers. Der Messwinkel kann 20°, 35°, 60° (bevorzugt) und 80° oder 85° betragen.

Als Polymerschutzschicht kommt bevorzugt eine Schmelzmasse aus Polyethylen (PE, bevorzugt HDPE) oder aus PE (bevorzugt LDPE im Gemisch mit linearem Polyethylen niederer Dichte, LLDPE) und Ethylenvinylacetat (EVA) zum Einsatz. EVA hat typischerweise einen Vinylacetatgehalt im Bereich von 15 bis 25 Gew.-%. Die Polymerschutzschicht kann Additive wie Thermostabilisatoren, HALS, UV-Stabilisatoren und ggfs. Füllstoffe enthalten. In einer bevorzugten Ausführungsform sind keine Additive enthalten oder nur UV-Stabilisatoren in geringerer als der üblichen Menge.

Das Material der Polymerschutzschicht zeigt durch Wahl des richtigen Gewichtsverhältnisses von PE zu EVA eine gewünschte Haftung zu der PUR-Schmelzmassenschicht oder dem Lack. Die Haftung soll ausreichen, dass die Polymerschutzschicht sich bis zum Abschluss der Bauelementfertigung nicht wesentlich ablöst. Sie muss gering genug sein, um ein Abziehen der Schutzschicht zu erlauben. Die Mischungsverhältnisse hängen von der eingestellten Oberflächenrauigkeit sowie ggfs. auch von der gewünschten Haftung zum Lack ab. Das Mischungsverhältnis PE:EVA, bezogen auf die Masse, kann je nach gewünschter Haftung von 1:5 bis 5:1, vorzugsweise von 1:1 bis 3:1, betragen. Die Haftung kann auch durch Mischung verschiedener PE beeinflusst werden, so führt eine Zumischung von LLDPE zu einer verstärkten Haftung und gleichzeitig verbesserten Reißfestigkeit, was das Abziehen erleichtert. Auch andere Schmelzmassen, die mit der PUR-Schmelzbeschichtungsschicht oder dem Lack die gewünschte Haftung aufbauen, sind möglich, z.B. Massen die als Schutz für PVCkaschierte Bleche bekannt sind.

Die Polymerschutzschicht kann nach der PUR Schmelzmassenbeschichtung oder nach dem Lackieren auf die raue Oberfläche im Gießbeschichtungsverfahren, Rakelverfahren oder Walzverfahren aufgetragen werden. Bevorzugt ist das Gießverfahren in einen gekühlten Walzenspalt. In diesem Prozess läuft die Schmelzmasse in die Täler und entschärft die abrasive Wirkung. Die den Ummantelungsandruckrollen zugewandte Seite ist vornehmend glatt ausgebildet.

Die Auftragsmenge hängt von der Struktur der rutschhemmenden PUR-Schmelzbeschichtung ab und beträgt von 20 g/m² bis 200 g/m², bevorzugt von 100 g/m² und 150 g/m².

Die Gesamtstärke der UV Schutzfolie ohne Polymerschutzschicht beträgt üblicherweise von 50 bis 1000 µm, vorzugsweise von 100 bis 750 µm und besonders bevorzugt von 150 bis 550 µm.

Die erhaltene bzw. erfindungsgemäße UV Schutzfolie hat vorzugsweise mindestens eine der folgenden Eigenschaften:
- Kratzfestigkeit ≥ 3 N, vorzugsweise ≥ 4 N, nach DIN 15186, bzw. mindestens Klasse A3 nach DIN EN 16094:2012-04 und B3 nach DIN CEN/TS 16611:2014, und/oder
- Abrieb- und Verschleißfestigkeit ≥ 3.000 Umdrehungen, vorzugsweise ≥ 4.000 Umdrehungen nach DIN EN 13329 bzw. ≥ 8.000 Umdrehungen, vorzugsweise 10.000 Umdrehungen nach EN 14354:2017-11, und/oder
- Witterungsbeständigkeit mit mindestens 10.000, vorzugsweise mindestens 15.000, Teststunden nach EN 513 (Verfahren 1 (M)) und dabei eine Mindeststabilität der Farbe von Graumaßstab 3, bewertet nach EN 20105-A02 und/oder
- Rutschfestigkeit erreicht mindestens Klasse R10, was nach DIN 51130:2014 einer Mindestschräge von 10° entspricht, vorzugsweise R11.

Als Substrate kommen Holz, Metall, Kunststoff und Verbundwerkstoffe, bevorzugt WPC und Faserverbundwerkstoffe in Betracht. Auch Substrate aus Stein und Beton sowie Estrich sind möglich, insbesondere bei Basisfolien mit höherer Stärke wie 500 µm bis 2 mm. Das Substrat stellt die notwendigen mechanischen Eigenschaften für das Bauelement bereit. Durch die Beschichtung mit der UV Schutzfolie erfolgt einerseits die gewünschte optische Gestaltung, andererseits wird damit das Substrat auch vor der Witterung geschützt. Kunststoffe altern nicht durch UV-Licht, Metalle korrodieren nicht, Holz bleibt trocken und wird ebenfalls vor UV-Licht geschützt. Die Oberfläche ist leicht zu reinigen und bleibt so wesentlich länger und mit viel weniger Aufwand optisch ansprechend.

Typische Bauelemente sind Bodendielen und -platten für Terrassen, Balkone, Wege etc., Paneele, Zaunpfähle und -elemente, Sichtschutzelemente, und Pflanzkästen. Von besonderem Interesse sind gemäß der Erfindung die Bodenbeläge, da diese hohe Anforderungen an die Rutschsicherheit stellen, besonders schnell verschmutzen und eine hohe UV- und mechanische Belastung haben. Bisherige Produkte haben oft die Rutschsicherheit nicht erreicht, wurden durch UV-Licht zu schnell in der Optik verschlechtert und/oder waren den mechanischen Belastungen nicht gewachsen. Delaminierung, besonders an Ecken und Kanten, kam häufig vor.

Die mit der erhaltenen bzw. der erfindungsgemäßen UV Schutzfolie hergestellten Bauelemente haben demgegenüber einen verbesserten UV-Schutz, insbesondere bei Vorliegen der Zwischenschicht, und müssen keine Kompromisse in Sachen Rutschsicherheit machen. Auch die mechanische Belastbarkeit ist verbessert, da die Haftung der Basisfolie auf dem Substrat und der Folienschichten untereinander durch die beschriebenen Maßnahmen optimal ist.

Bekannt für den Einsatz im Außenbereich sind z.B. die Elesgo Folie auf Papierbasis. Bei dieser Folie wird eine mit Acrylat imprägnierte bedruckte Papierfolie mit einem dicken korundhaltigen Acryllack beschichtet. Die oberste Struktur wird durch eine Strukturgeberfolie erzeugt, wobei lediglich Rutschhemmungen im Bereich von R10 zu erreichen sind. Dies ist für ein sicheres Begehen bei Nässe ein geringer Wert. Varianten dieser Folie auf Kunststoffbasis mit einer verbesserten inneren Festigkeit haben aufgrund der identischen Herstellungstechnologie der Beschichtung das gleiche negative Rutschverhalten. Der Prozess ist unter https://laminate.de/index.php/de/technologie2/prozess gezeigt.

Weiterhin sind HPL Compactplatten bekannt, die auf der Basis von Melamin oder Phenolharzgetränkten Papieren erzeugt werden. Viele dieser Produkte haben aufgrund des Druckes eine geringe Lichtbeständigkeit. Die Rutschhemmung dieser Produkte wird über Pressbleche erzeugt, was die Wirksamkeit von eingestreutem Korund in die oberste Papierlage verringert. So wird zwar eine gute Abriebbeständigkeit erreicht, die Rutschhemmung ist aber eher gering, da die Pressbleche aufgrund des Prozesses sonst schnell verschlissen sind.

Der aktuelle Stand der Technik kennt mit Ausnahme der in PCT/EP2021/078028 offenbarten UV Schutzfolien im horizontalen Außenbereich keine hochwertigen Dekore, wie sie mit dieser Erfindung umgesetzt werden können. Bestehende Systeme scheitern bereits nach wenigen Jahren an dem hohen Anspruch. Bekannte Fehler sind ein Trennen der Schichten, Brechen der Schichten, Ausbleichen und Verändern der Farbe aufgrund der Verwendung ungeeigneter UV-Schutzschichten, schwierige Prozessführung aufgrund zu hoher Steifigkeiten, Begünstigung einer Wasseraufnahme und daraus resultierendes Quellvermögen, mangelnde Haftung zum Trägermaterial.

Weiterhin sind die erfindungsgemäßen UV Schutzfolien sehr gut zur dekorativen Gestaltung von Schwimmbadabdeckungen geeignet (sog. Rollladensystem). Bisher bekannte Kunststofffolien sind häufig an der fehlenden Witterungsstabilität gescheitert. Bei Kunststofffolien mit einer transparenten Polyacrylatschicht als Witterungsschutz ist deren Eintrübung durch Wasseraufnahme ein Problem. Bei den erfindungsgemäßen UV-Schutzfolien sind dagegen eine gute Stabilität in chlorhaltigem (und auch salzhaltigem) Schwimmbadwasser sowie die notwendige Witterungsstabilität gegeben. Als Substrat sind die bekannten Rolladen-ähnlichen Abdeckungen geeignet mit der Bedingung, dass die Abdeckung schwimmfähig sein muss. Somit sind Segmente aus Holz, Kunststoff und Verbundwerkstoffen bevorzugt, bei den besonders bevorzugten hohlen Segmenten solche aus Kunststoff, Verbundwerkstoffen und Metall.

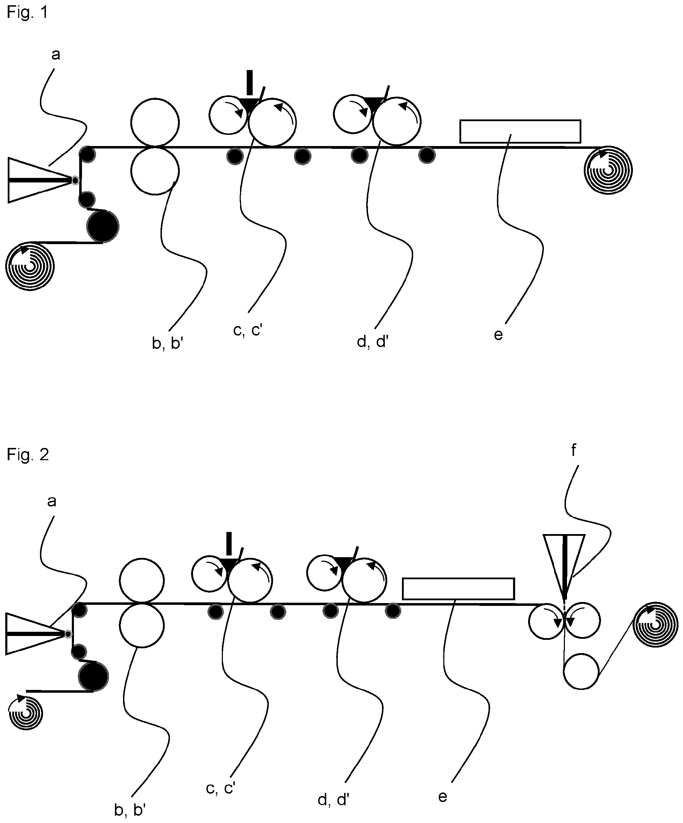

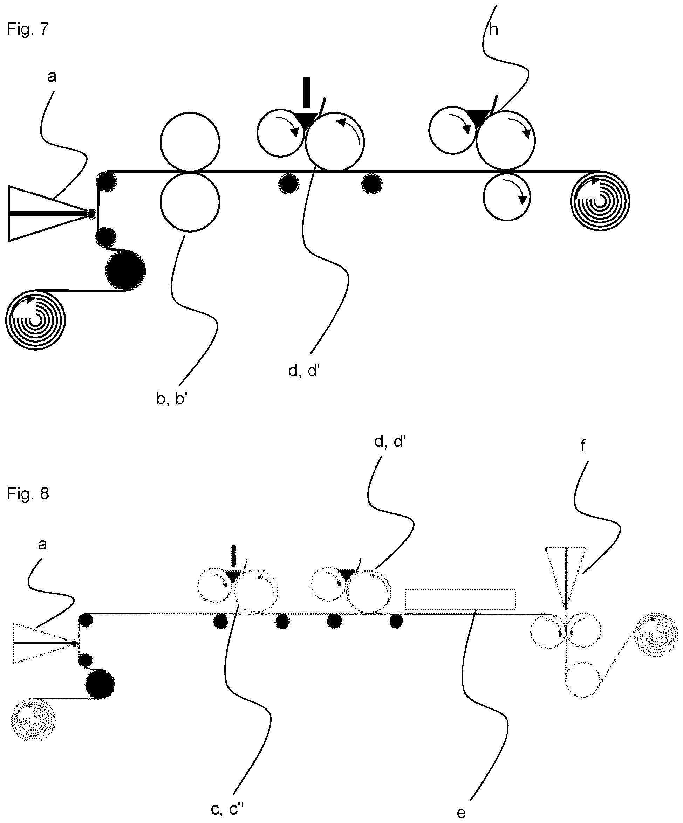

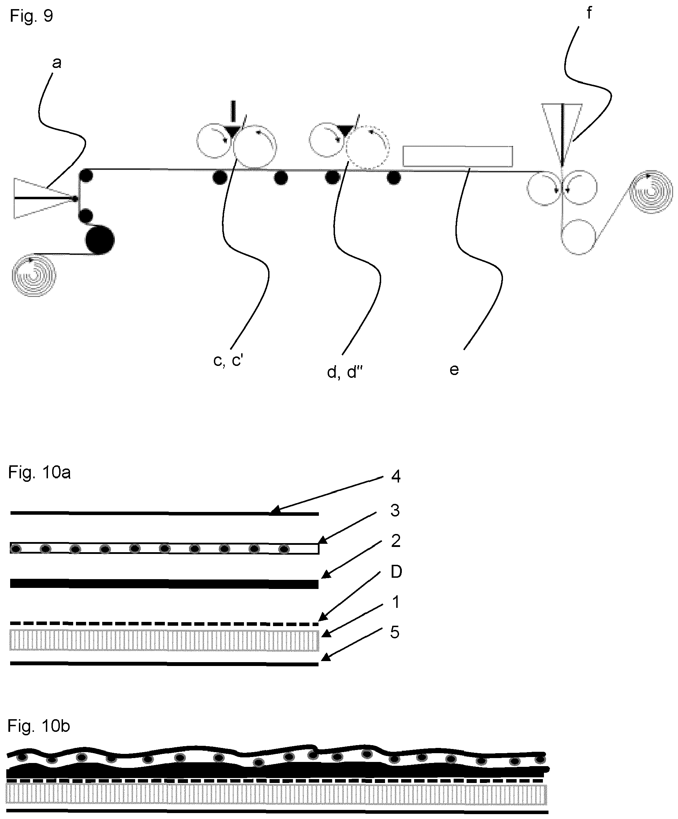

Ausführungsformen des Verfahrens zur Herstellung der UV Schutzfolie gemäß PCT/EP2021/078028 sind in Figuren 1 bis 7 veranschaulicht. Zwei Ausführungsformen des Verfahrens gemäß der vorliegenden Erfindung sind in den Figuren 8 und 9 dargestellt. Für gleiche Verfahrensabläufe werden gleiche Bezugszeichen für die in den Figuren gezeigten Vorrichtungen verwendet. Bei allen veranschaulichten Verfahren wird eine Basisfolie 1 in an sich bekannter Weise hergestellt (nicht gezeigt), z.B. durch Kalandrieren. Diese Basisfolie 1 wird in ebenso bekannter Weise bedruckt (sofern es sich nicht um eine eingefärbte Folie für einfarbige Bauelemente handelt) und ggfs. unterseitig (unten meint dem Substrat zugewandt) mit einem Primer 5 versehen und/oder bestrahlt. Üblicherweise wird die Basisfolie 1 aufgerollt und eingelagert. Im nächsten Schritt wird die bedruckte (oder eingefärbte) Basisfolie 1 abgerollt und eine Reaktivschmelzmasse auf die Basisfolie 1 oder den Druck D aufgebracht.

In den in Figuren 1, 2, 4, 6, 8 und 9 gezeigten Ausführungsformen wird zunächst eine Zwischenschicht 2 ohne Partikel mittels Schlitzdüse a appliziert. Bei den Ausführungsformen gemäß PCT/EP2021/078028 in Figuren 1, 2, 4 und 6 wird die Zwischenschicht 2 auf der Basisfolie 1 wird mit einem Walzenpaar b, b' geprägt.

In allen Figuren wird eine abriebbeständige Schmelzbeschichtung auf Polyurethanbasis mit Partikeln als zweite bzw. dritte Schicht 3 mittels Walzen c, c' appliziert. Beim erfindungsgemäßen Verfahren in Figur 8 erfolgt dies mit einem Walzenpaar, bei dem eine Walze c" strukturiert ist, so dass die Strukturierung der PUR-Schmelzbeschichtung direkt beim Auftrag der Schicht erfolgt. Eine separate Prägung ist nicht nötig und erfolgt vorzugsweise auch nicht. Die erwärmte PUR-Schmelzbeschichtung 3 härtet nach dem Auftrag durch Kontakt mit der Luftfeuchtigkeit aus. Alternativ kann für strahlenhärtende Reaktivschmelzmassen eine Strahlenhärtung vorgesehen sein.

Dann wird in Figuren 1, 2, 4, 6, 8 und 9 der Lack 4, hier ein UV-härtender Acrylatlack, mittels Walzenauftrag durch die Walzen d, d' aufgetragen. Bei der erfindungsgemäßen Ausführungsform in Figur 9 ist eine der Walzen d" strukturiert, so dass die Strukturierung der Folie direkt beim Auftrag des Lackes erfolgt. Der Lack 4 wird durch UV-Strahlung aus der Strahlungsquelle e gehärtet Die Aushärtung des Lacks erfolgt z.B. durch UV-Lampen, LED-Strahler; ein Excimerlaser oder Excimer-UV-Strahler wird ggf. zusätzlich genutzt, um eine Mattierung und verbesserte Kratzfestigkeit der Oberfläche zu erreichen.

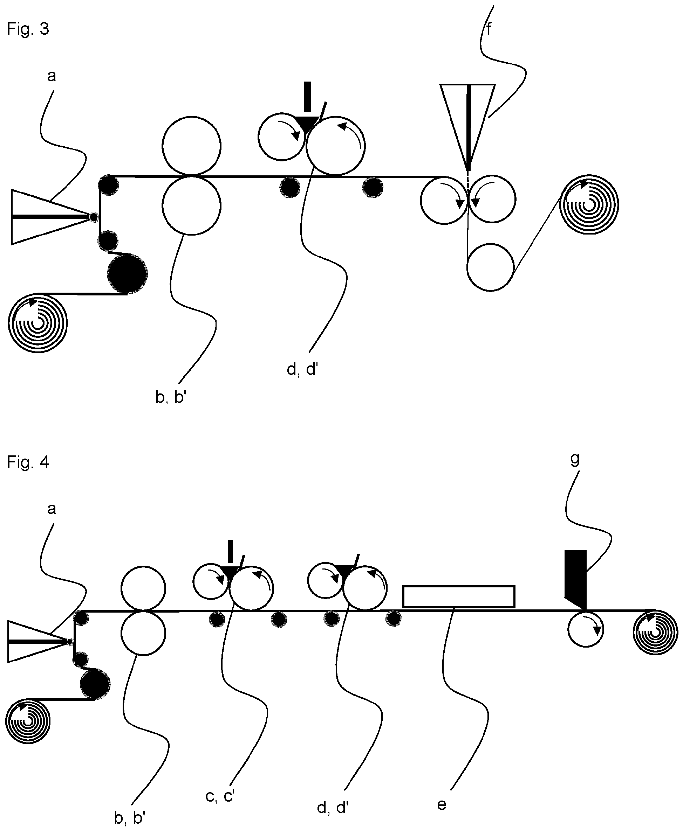

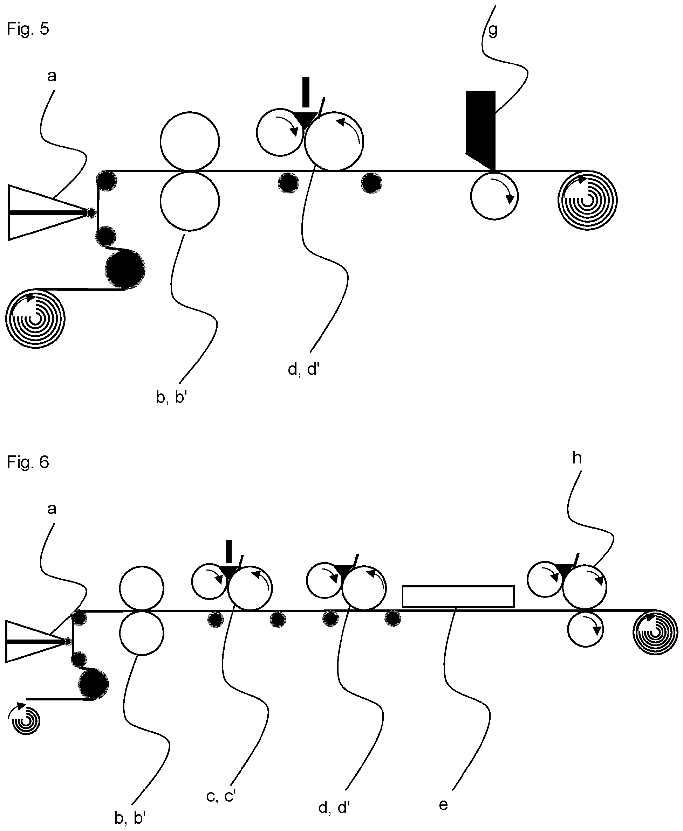

Gemäß Figur 2, 8 und 9 wird auf den Lack eine Polymerschutzschicht 6 aufgegossen, gemäß Figur 4 aufgerakelt und gemäß Figur 6 aufgewalzt. In Figur 3 wird die Polymerschutzschicht 6 direkt auf die PUR Schmelzbeschichtung 3 aufgegossen, in Figur 5 aufgerakelt und in Figur 7 aufgewalzt.

Die fertige UV Schutzfolie wird aufgewickelt und ist nach dem Aushärten der Schmelzbeschichtung(en) zum Beschichten von Substraten bereit. Sie umfasst bei den Figuren 1, 2, 4, 6, 8 und 9 eine Zwischenschicht 2 und einen Lack 4, sowie bei den Figuren 2 bis 9 eine Polymerschutzschicht 6. Bei Figur 3, 5 und 7 fehlen der Lack 4 und die Zwischenschicht 2, bei Figur 1 eine Polymerschutzschicht 6.

Die Figuren 10a und 10b zeigen schematisch die Schichten einer ersten bevorzugten UV Schutzfolie getrennt und zusammengebracht. Man erkennt hier, wie die Prägung der Zwischenschicht 2 die Oberflächenstruktur der UV Schutzfolie bestimmt. PUR-Schmelzbeschichtung 3 und Lack 4 folgen der Struktur der Zwischenschicht 2.

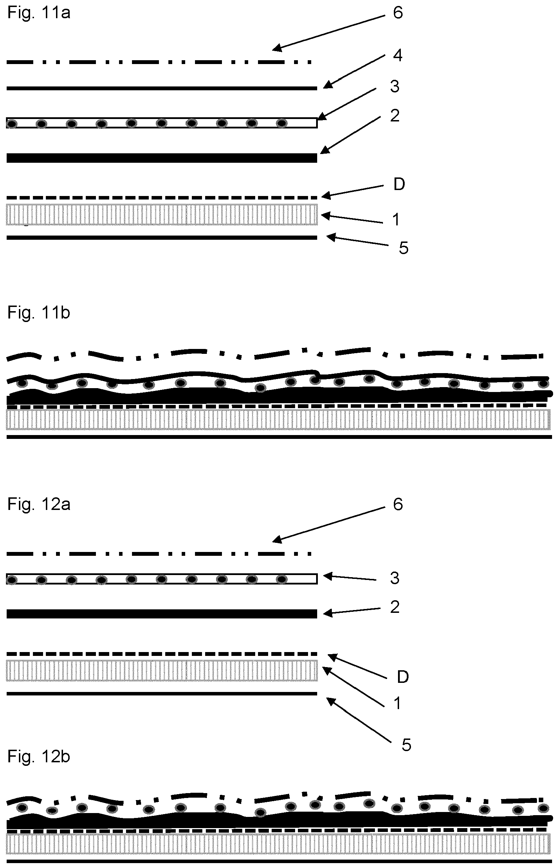

Die Figuren 11a und 11b zeigen schematisch die Schichten einer zweiten bevorzugten UV Schutzfolie getrennt und zusammengebracht. Man erkennt hier, wie die Prägung der Zwischenschicht 2 die Oberflächenstruktur der UV Schutzfolie bestimmt. PUR-Schmelzbeschichtung 3, Lack 4 und Polymerschutzschicht 6 folgen der Struktur der Zwischenschicht 2.

Die Figuren 12a und 12b zeigen schematisch die Schichten einer dritten bevorzugten UV Schutzfolie getrennt und zusammengebracht. Man erkennt hier, wie die Prägung der Zwischenschicht 2 die Oberflächenstruktur der UV Schutzfolie bestimmt. PUR-Schmelzbeschichtung 3 und Polymerschutzschicht 6 folgen der Struktur der Zwischenschicht 2.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

### Bevorzugt sind folgende Ausführungsformen:

### Ausführungsform 1:

Verfahren zur Herstellung einer UV Schutzfolie umfassend die Schritte:
- Bereitstellen einer Basisfolie aus Polyvinylchlorid, Polyacrylat oder Polyolefin, die ein gedrucktes Design und/oder eine Färbung der Basisfolie aufweist,
- Aufbringen einer abriebbeständigen Schmelzbeschichtung auf Polyurethanbasis oberhalb der Basisschicht, und
- Aufbringen eines Lackes und/oder einer Polymerschutzschicht oberhalb der abriebbeständigen Schmelzbeschichtung,
wobei die abriebbeständige Schmelzbeschichtung auf Polyurethanbasis und/oder der Lack und/oder eine aufgebrachte Zwischenschicht aus einer Reaktivschmelzmasse auf Polyurethanbasis geprägt wird, indem der Auftrag durch ein Walzenpaar mit einer strukturierten Walze erfolgt.

### Ausführungsform 2:

Verfahren gemäß Ausführungsform 1, wobei oberhalb der Basisfolie und unter der abriebbeständigen Schmelzbeschichtung auf Polyurethanbasis eine glatte oder geprägte Zwischenschicht umfassend eine Reaktivschmelzmasse auf Polyurethanbasis aufgebracht wird, die keine oder weniger Partikel enthält als die abriebbeständige Schmelzbeschichtung auf Polyurethanbasis.

### Ausführungsform 3:

Verfahren gemäß Ausführungsform 2, wobei der Auftrag der Reaktivschmelzmasse in einer solchen Menge erfolgt, dass die Stärke der Zwischenschicht von 10 bis 100 µm, vorzugsweise von 20 bis 80 µm, besonders bevorzugt 30 bis 60 µm, beträgt.

### Ausführungsform 5:

Verfahren gemäß einer der Ausführungsformen 1 bis 3, wobei auf die Basisfolie unterseitig ein Primer aufgetragen ist und/oder die Basisfolie unterseitig einer Plasmastrahlung oder Koronabehandlung unterzogen wurde.

### Ausführungsform 5:

Verfahren gemäß einer der Ausführungsformen 1 bis 4, wobei die Basisfolie mit einer Stärke von 40 bis 450 µm, bevorzugt 80 bis 250 µm, vorzugsweise von 100 bis 200 µm und besonders bevorzugt von 120 bis 160 µm bereitgestellt wird.

### Ausführungsform 6:

Verfahren gemäß einer der Ausführungsformen 1 bis 5, wobeidie abriebbeständige Schmelzbeschichtung Partikel enthält, die ausgewählt sind unter anderem aus Glaspartikeln, als Schleifmittel verwendeten Partikeln und Mischungen davon, vorzugsweise Korund.

### Ausführungsform 7:

Verfahren gemäß einer der Ausführungsformen 1 bis 6, wobei die abriebbeständige Schmelzbeschichtung in einer solchen Menge aufgetragen wird, dass sie eine Stärke von 10 bis 150 µm, vorzugsweise von 20 bis 120 µm und insbesondere von 30 bis 100 µm hat.

### Ausführungsform 8:

Verfahren gemäß einer der Ausführungsformen 1 bis 7, wobei der Lack ein Acrylatlack oder ein Polyurethanlack ist, vorzugsweise ein strahlenhärtbarer Acrylat- oder Polyurethanlack.

### Ausführungsform 9:

Verfahren gemäß einer der Ausführungsformen 1 bis 8, wobei der Lack in einer solchen Menge aufgetragen wird, dass er eine Stärke von 1 bis 50 µm, vorzugsweise von 3 bis 15 µm, besonders bevorzugt von 5 bis 10 µm, hat.

### Ausführungsform 10:

Verfahren gemäß einer der Ausführungsformen 1 bis 9, wobei die Polymerschutzschicht aus Polyethylen oder aus einer Mischung von Polyethylen und Ethylenvinylacetat, vorzugsweise im Gewichtsverhältnis 1:5 bis 5:1, ist, und/oder in einer Menge von 20 bis 200 g/m2 aufgebracht wird.

### Ausführungsform 11:

Verfahren gemäß einer der Ausführungsformen 1 bis 10, wobei die Basisfolie im Tiefdruck, insbesondere mit Lösungsmittelfarben, oder im Digitaldruck bedruckt wurde.

### Ausführungsform 12:

Verfahren gemäß einer der Ausführungsformen 1 bis 11, wobei die abriebbeständige Schmelzbeschichtung durch Aufstreichen, Aufrakeln oder Walzenauftrag appliziert wird, vorzugsweise durch Walzenauftrag wobei eine der Walzen strukturiert ist.

### Ausführungsform 13:

Verfahren gemäß einer der Ausführungsformen 1 bis 12, wobei die Zwischenschicht aus Reaktivschmelzmasse unter der abriebbeständigen Schmelzbeschichtung eingebracht ist, vorzugsweise mit einer Schlitzdüse.

### Ausführungsform 14:

Verfahren gemäß einer der Ausführungsformen 1 bis 13, wobei ein Prägemuster auf das gedruckte Design abgestimmt wird.

### Ausführungsform 15:

Verfahren gemäß einer der Ausführungsformen 1 bis 14, wobei die mit der strukturierten Walze eingebrachten Prägetiefen von 5 bis 30 µm, vorzugsweise von 10 bis 20 µm, betragen.

### Ausführungsform 16:

Verfahren gemäß einer der Ausführungsformen 1 bis 15, wobei der Lack durch Strahlung gehärtet wird und/oder die Polymerschutz-schicht durch Aufgießen, Aufrakeln oder Walzenauftrag aufgebracht wird.

### Ausführungsform 17:

Verfahren zur Herstellung von beschichteten Bauelementen, wobei eine UV Schutzfolie hergestellt gemäß einem der Ausführungsformen 1 bis 16 mit einem Substrat laminiert wird.

### Ausführungsform 18:

Verfahren gemäß Ausführungsform 17, wobei die UV Schutzfolie mit dem Substrat durch eine Hitzelaminierung oder eine Kleberlaminierung, z.B. mittels Polyurethanhotmeltkleber oder reaktivem Polyolefinhotmelt oder reaktivem Silanterminierter Hotmelt, laminiert wird.

### Ausführungsform 19:

Verfahren gemäß Ausführungsform 17 oder 18, wobei das Substrat aus Holz, Metall, Kunststoff oder Verbundwerkstoff, insbesondere WPC oder Faserverbundwerkstoff, ist.

### Ausführungsform 20:

Verfahren gemäß einer der Ausführungsformen 17 bis 19, wobei das Bauelement ausgewählt ist unter Bodendielen und -platten, Paneelen, Zaunpfählen und - elementen, Sichtschutzelementen, Schwimmbadabdeckungen und Pflanzkästen.

### Ausführungsform 21:

UV Schutzfolie umfassend
- eine Basisfolie aus PVC, Polyacrylat oder Polyolefin,
- ein gedrucktes Design und/oder eine Färbung der Basisfolie,
- eine glatte Zwischenschicht umfassend eine erste Schmelzbeschichtung auf Polyurethanbasis
- eine Schicht umfassend eine abriebbeständige, zweite Schmelzbeschichtung auf Polyurethanbasis,
- einen Lack und/oder einer Polymerschutzschicht
wobei die abriebbeständige, zweite Schmelzbeschichtung und/oder der Lack strukturiert ist.

### Ausführungsform 22:

UV Schutzfolie gemäß Ausführungsform 21, wobei die erste Schmelzbeschichtung keine oder weniger Partikel enthält, als die abriebbeständige, zweite Schmelzbeschichtung.

### Ausführungsform 23:

UV Schutzfolie gemäß Ausführungsform 21 oder 22, die durch ein Verfahren gemäß einer der Ausführungsformen 1 bis 20 herstellbar ist.

### Bezugszeichenliste

- 1: Basisfolie
- 2: Zwischenschicht
- 3: PUR-Schmelzbeschichtung auf Polyurethanbasis
- 4: Lack
- 5: Primer
- 6: Polymerschutzschicht

- D: Druck
- a: Schlitzdüse mit oder ohne Rollstab
- b, b': Prägewalzenpaar
- c, c': Walzenauftrag PUR-Schmelzbeschichtung, c, c" mit strukturierter Walze c"
- d, d': Walzenauftrag Lack, d, d" mit strukturierter Walze d"
- e: Strahlungsquelle
- f: Aufgießen (Direktextrusion) Polymerschutzschicht
- g: Rakelauftrag Polymerschutzschicht
- h: Walzenauftrag Polymerschutzschicht

## Patentansprüche

1. Verfahren zur Herstellung einer UV Schutzfolie umfassend die Schritte:
- Bereitstellen einer Basisfolie aus Polyvinylchlorid, Polyacrylat oder Polyolefin, die ein gedrucktes Design und/oder eine Färbung der Basisfolie aufweist,
- Aufbringen einer abriebbeständigen Schmelzbeschichtung auf Polyurethanbasis oberhalb der Basisschicht, und
- Aufbringen eines Lackes und/oder einer Polymerschutzschicht oberhalb der abriebbeständigen Schmelzbeschichtung,
wobei die abriebbeständige Schmelzbeschichtung auf Polyurethanbasis und/oder der Lack und/oder eine aufgebrachte Zwischenschicht aus einer Reaktivschmelzmasse auf Polyurethanbasis geprägt wird, indem der Auftrag durch ein Walzenpaar mit einer strukturierten Walze erfolgt.

2. Verfahren gemäß Anspruch 1, **dadurch gekennzeichnet, dass** oberhalb der Basisfolie und unter der abriebbeständigen Schmelzbeschichtung auf Polyurethanbasis eine glatte oder geprägte Zwischenschicht umfassend eine Reaktivschmelzmasse auf Polyurethanbasis aufgebracht wird, die keine oder weniger Partikel enthält als die abriebbeständige Schmelzbeschichtung auf Polyurethanbasis.

3. Verfahren gemäß Anspruch 1 oder 2, **dadurch gekennzeichnet, dass** die abriebbeständige Schmelzbeschichtung Partikel enthält, die ausgewählt sind unter anderem aus Glaspartikeln, als Schleifmittel verwendeten Partikeln und Mischungen davon, vorzugsweise Korund.

4. Verfahren gemäß einem der Ansprüche 1 bis 3, **dadurch gekennzeichnet, dass** der Lack ein Acrylatlack oder ein Polyurethanlack ist, vorzugsweise ein strahlenhärtbarer Acrylat- oder Polyurethanlack.

5. Verfahren gemäß einem der Ansprüche 1 bis 4, **dadurch gekennzeichnet, dass** die Polymerschutzschicht aus Polyethylen oder aus einer Mischung von Polyethylen und Ethylenvinylacetat, vorzugsweise im Gewichtsverhältnis 1:5 bis 5:1, ist, und/oder in einer Menge von 20 bis 200 g/m² aufgebracht wird.

6. Verfahren gemäß einem der Ansprüche 1 bis 5, **dadurch gekennzeichnet, dass** die Basisfolie im Tiefdruck, insbesondere mit Lösungsmittelfarben, oder im Digitaldruck bedruckt wurde.

7. Verfahren gemäß einem der Ansprüche 1 bis 6, **dadurch gekennzeichnet, dass** die abriebbeständige Schmelzbeschichtung durch Aufstreichen, Aufrakeln oder Walzenauftrag appliziert wird, vorzugsweise durch Walzenauftrag wobei eine der Walzen strukturiert ist.

8. Verfahren gemäß einem der Ansprüche 1 bis 7, **dadurch gekennzeichnet, dass** die Zwischenschicht aus Reaktivschmelzmasse unter der abriebbeständigen Schmelzbeschichtung eingebracht ist, vorzugsweise mit einer Schlitzdüse.

9. Verfahren gemäß einem der Ansprüche 1 bis 8, **dadurch gekennzeichnet, dass** der Lack durch Strahlung gehärtet wird und/oder die Polymerschutzschicht durch Aufgießen, Aufrakeln oder Walzenauftrag aufgebracht wird.

10. Verfahren zur Herstellung von beschichteten Bauelementen, **dadurch gekennzeichnet, dass** eine UV Schutzfolie hergestellt gemäß einem der Ansprüche 1 bis 9 mit einem Substrat laminiert wird.

11. Verfahren gemäß Anspruch 10, **dadurch gekennzeichnet, dass** die UV Schutzfolie mit dem Substrat durch eine Hitzelaminierung oder eine Kleberlaminierung, z.B. mittels Polyurethanhotmeltkleber oder reaktivem Polyolefinhotmelt oder reaktivem Silanterminierter Hotmelt, laminiert wird.

12. Verfahren gemäß Anspruch 10 oder 11, **dadurch gekennzeichnet, dass** das Substrat aus Holz, Metall, Kunststoff oder Verbundwerkstoff, insbesondere WPC oder Faserverbundwerkstoff, ist, und/oder das Bauelement ausgewählt ist unter Bodendielen und -platten, Paneelen, Zaunpfählen und -elementen, Sichtschutzelementen, Schwimmbadabdeckungen und Pflanzkästen.

13. UV Schutzfolie umfassend
- eine Basisfolie aus PVC, Polyacrylat oder Polyolefin,
- ein gedrucktes Design und/oder eine Färbung der Basisfolie,
- eine glatte Zwischenschicht umfassend eine erste Schmelzbeschichtung auf Polyurethanbasis
- eine Schicht umfassend eine abriebbeständige, zweite Schmelzbeschichtung auf Polyurethanbasis,
- einen Lack und/oder einer Polymerschutzschicht
wobei die abriebbeständige, zweite Schmelzbeschichtung und/oder der Lack strukturiert ist.

14. UV Schutzfolie gemäß Anspruch 13, **dadurch gekennzeichnet, dass** die erste Schmelzbeschichtung keine oder weniger Partikel enthält, als die abriebbeständige, zweite Schmelzbeschichtung.

15. UV Schutzfolie gemäß Anspruch 13 oder 14, **dadurch gekennzeichnet, dass** sie durch ein Verfahren gemäß einem der Ansprüche 1 bis 9 herstellbar ist.
